# EUROPEAN PATENT APPLICATION

(11) **EP 4 053 777 A1**
(43) Date of publication of application: **07.09.2022**
(21) Application number: 20903792.8
(22) Date of filing: 07.12.2020
(51) Int. Cl.: G06Q 50/02, A01G 7/00

(54) **GROWING ENVIRONMENT CONTROL SYSTEM**

(30) Priority: 18.12.2019 JP 2019228370
(71) Applicant: OMRON Corporation, Kyoto-shi, Kyoto 600-8530 (JP)
(72) Inventor: MIYAKE, Kazunari, Kyoto-shi, Kyoto 600-8530 (JP); IWATA, Jiro, Kyoto-shi, Kyoto 600-8530 (JP); TAKAGI, Hiroshi, Tokyo 108-0075 (JP); NAGASHIMA, Atsushi, Kyoto-shi, Kyoto 600-8530 (JP); SUGIKI, Toshikazu, Kyoto-shi, Kyoto 600-8530 (JP)
(74) Representative: Isarpatent
(86) International application number: PCT/JP2020/045539
(87) International publication number: WO 2021/124962

(57) **Abstract**

A growing environment control system includes a house environment control device that controls a surrounding environment of plants under cultivation in an agricultural house, and a parameter management device that creates and provides template parameter information including environment parameter information used by the house environment control device and pertaining to control of the surrounding environment, and identification information pertaining to content or an attribute of the environment parameter information and used for identifying the environment parameter information.

## Description

### TECHNICAL FIELD

The present invention relates to a growing environment control system for controlling a growing environment in which plants such as crops and fruit trees are cultivated in a plurality of agricultural houses.

### BACKGROUND ART

In order to increase productivity, it is required that the cultivation of plants such as crops and fruit trees be managed so as to maintain an appropriate growing environment in accordance with a growth state of the plants. For example, Patent Document 1 discloses an environment control system that controls an environment in an agricultural facility (hereinafter, referred to as an agricultural house) such as a plastic greenhouse or a greenhouse.

As disclosed in Patent Document 1, the agricultural house is provided with various kinds of measurement instruments for acquiring data on an internal environment, such as temperature, humidity, sunlight, and carbon dioxide concentration. The agricultural house is further provided with conditioning equipment that adjusts the internal environment, such as an air conditioner, a blower, a temperature and humidity control device, a carbon dioxide gas generation device, and a sunshade device. Patent Document 1 further discloses a case where a control device of the environment control system controls the conditioning equipment on the basis of various kinds of data acquired by the measurement instruments provided in the agricultural house to maintain the internal environment of the agricultural house under a setting environment set to the house via an input device serving as a user interface.

In order to control environments of a plurality of agricultural houses, it is however necessary to operate an input device provided for each agricultural house to input a corresponding setting environment to the control device. For this reason, when a setting environment the same as a setting environment set to one agricultural house is used for another agricultural house, the same setting environment needs to be input again for each of the agricultural houses to which the same setting environment is set, and when the number of agricultural houses to which the same setting environment is set is relatively large, a load of setting work becomes large. Further, data on the setting environment used in the past is not left, and how to manage data on the setting environments set to the agricultural houses is mainly left to the discretion of an individual producer, such as making notes of the data on a memo pad or the like. For this reason, producers who cultivate plants using agricultural houses have demanded the sharing of information on past setting environments set under a specific condition such as a low temperature, a high temperature, and a lack of sunlight, which inhibits the growth of plants.

### PRIOR ART DOCUMENTS

### PATENT DOCUMENTS

Patent Document 1: Japanese Unexamined Patent Publication No. 2015-87100

### SUMMARY OF THE INVENTION

### PROBLEMS TO BE SOLVED BY THE INVENTION

The present invention has been made in view of the above-described problems, and it is therefore an object of the present invention to provide a technology to allow environments of a plurality of agricultural houses to be controlled on the basis of data used for controlling a surrounding environment.

### MEANS FOR SOLVING THE PROBLEM

According to the present invention for solving the above-described problems, provided is a growing environment control system including a house environment control device configured to control a surrounding environment of plants under cultivation in an agricultural house, and a parameter management device configured to manage, in a collective manner, environment parameter information used by the house environment control device and pertaining to control of the surrounding environment, the parameter management device including a manager configured to create template parameter information including the environment parameter information and identification information pertaining to content or an attribute of the environment parameter information and used for identifying the environment parameter information, hold the template parameter information created in a storage, and provide the template parameter information held in the storage in response to a use request from the house environment control device.

This allows the parameter management device to create template parameter information that can be used in common for a plurality of house environment control devices on the basis of environment parameter information used by the house environment control devices and hold the template parameter information in the storage. The template parameter information thus created includes identification information pertaining to content or an attribute of the environment parameter information from which the template parameter information is created and used for identifying the environment parameter information. For this reason, a producer or the like who reuses template parameter information can select or determine to reuse desired template parameter information on the basis of the identification information. Then, the parameter management device can provide the template parameter information held in the storage in response to a use request from the house environment control device. The parameter management device of the present system can provide a technology to allow environments of a plurality of agricultural houses to be controlled on the basis of data used for controlling the surrounding environment.

Here, the identification information can include information on at least one of a name of a creator of the environment parameter information, a name of the template parameter information, classification information used for classifying conditions pertaining to the control of the surrounding environment of the house environment control device that has used the environment parameter information, a comment of the creator, a usage record of the environment parameter information, a comment of a user of the environment parameter information, or an evaluation of the environment parameter information. This allows the parameter management device to present a plurality of pieces of information used for making a determination on whether the environment parameter information included in the template parameter information can be reused. A producer who cultivates plants using an agricultural house can select template parameter information suitable for control of a desired surrounding environment from the template parameter information held in the storage on the basis of the identification information.

According to the present invention, the growing environment control system may further include a data recording device configured to record a history of cultivation data pertaining to the surrounding environment or a growing condition of the plants under cultivation measured by the house environment control device, and the manager may provide mapping information used for associating the house environment control device that uses the template parameter information to the cultivation data recorded in the data recording device of the house environment control device with the mapping information added to the template parameter information. This allows the history of cultivation data pertaining to the surrounding environment or growing condition of the plants under cultivation measured by the house environment control device using the template parameter information to be accumulated in the data recording device mapped by the mapping information. Then, cultivation data identified on the basis of the mapping information can show the actual surrounding environment or growing condition of the plants under cultivation controlled using the template parameter information. The present system can collect and convert, into assets, know-how for managing the environment in the agricultural house suitable for the growth state of the plants, which is mainly left to the discretion of an individual user.

Here, the cultivation data may include information on at least one of a temperature and humidity, a CO2 concentration, sunlight, an amount of moisture in soil, an amount of nutrients in soil, an amount of rainfall, a wind speed, a flow rate of sap in the plants, or an amount of nutrients absorbed by the plants. This allows the actual state of the control of the environment in the agricultural house for which the template parameter information has been used to be grasped in more detail.

Further, the mapping information may include communication address information on the house environment control device, structure information on the agricultural house, an identification number of the house environment control device, communication address information on the data recording device, and security information used for recording a history of data pertaining to the surrounding environment in the data recording device. This allows the house environment control device serving as a source of data accumulated in the data recording device and the history of data pertaining to the control of the surrounding environment of the agricultural house for which the template parameter information has been used to be associated with each other and managed in a centralized manner on the basis of the mapping information.

According to the present invention, the parameter management device may further include a display processor configured to create graph information showing changes in the cultivation data over time from the history of the cultivation data recorded in the data recording device, and the manager may provide, when providing the template parameter information, the graph information created from the history of the cultivation data of the house environment control device that has used the template parameter information. The present system allows the parameter management device to provide a record of cultivation data pertaining to the surrounding environment or growing condition of the plants under cultivation measured by the house environment control device using the template parameter information as a historical graph showing changes over time. A result of controlling the environment using the template parameter information can be provided to the producer in the form of a graph for easy visual recognition.

Further, according to the present invention, the manager may provide the template parameter information to a plurality of the house environment control devices registered in advance by batch or to a plurality of the house environment control devices corresponding to designated identification numbers. Further, the template parameter information may include partial environment parameter information used in common among the house environment control devices. This allows the same setting environment as the setting environment set to one agricultural house to be set to the other agricultural houses by batch or with an address designated. Further, the partial environment parameter information common among the plurality of agricultural houses can be set by batch or with an address designated. Even when the number of agricultural houses built in a cultivated field is relatively large, it is possible to reduce the load of work related to the setting of the environment parameter information.

### EFFECT OF THE INVENTION

According to the present invention, it is possible to provide a technology to allow environments of a plurality of agricultural houses to be controlled on the basis of data used for setting environments.

### BRIEF DESCRIPTION OF THE DRAWINGS

Fig. 1 is a functional block diagram of a growing environment control system according to a first embodiment of the present invention.
Fig. 2 is a block diagram of a more detailed functional configuration of a setting parameter management device and a cultivation data management DB according to the first embodiment of the present invention.
Fig. 3 is a block diagram of a more detailed functional configuration of the setting parameter management device and a house environment control device according to the first embodiment of the present invention.
Fig. 4 is a diagram illustrating one form of template parameter information provided from the setting parameter management device to the house environment control device according to the first embodiment of the present invention.
Fig. 5 is a diagram schematically illustrating a hardware configuration of the growing environment control system according to the first embodiment of the present invention.
Fig. 6 is an example of a hardware configuration diagram of the setting parameter management device according to the first embodiment of the present invention.
Fig. 7 is a flowchart illustrating an example of processing of registering template parameter information according to the first embodiment of the present invention.
Fig. 8 is a flowchart illustrating an example of processing of providing information pertaining to template parameters determined to be used according to the first embodiment of the present invention.
Fig. 9 is a flowchart illustrating an example of processing of setting the information pertaining to template parameters to another house according to the first embodiment of the present invention.

### MODE FOR CARRYING OUT THE INVENTION

Hereinafter, an application example of the present invention will be described with reference to the drawings.

### [Application example]

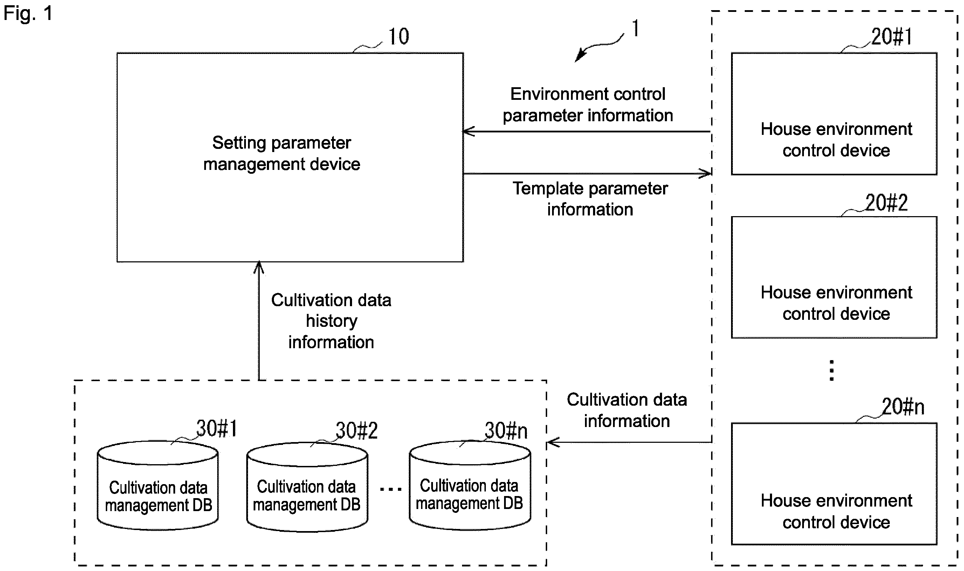

Hereinafter, the application example of the present invention will be described. The invention according to the application example is a plant growing environment control system that can control environments in a plurality of agricultural houses on the basis of parameter information pertaining to control of a surrounding environment of plants under cultivation in the agricultural houses. As illustrated in Fig. 1, the system includes a setting parameter management device 10, a house environment control device (20#1 to 20#n) that is provided for each agricultural house and controls a growing environment of plants under cultivation in the agricultural house, and a cultivation data management DB (30#1 to 30#n) that collects and accumulates cultivation data information pertaining to the plants under cultivation in each agricultural house. In the application example and the following embodiment, a plurality of the house environment control devices (20#1 to 20#n) are also collectively referred to as a "house environment control device 20", and a plurality of the cultivation data management DBs (30#1 to 30#n) are also collectively referred to as a "cultivation data management DB 30". Further, a description will be given of an example where cultivation data information pertaining to one house environment control device (for example, 20#1) is accumulated in a cultivation data management DB (for example, 30#1) associated with the house environment control device in a one-to-one relationship. Note that, in the application example and the following embodiment, the setting parameter management device 10 corresponds to an example of a "parameter management device", the house environment control device 20 corresponds to an example of a "house environment control device", and the cultivation data management DB 30 corresponds to an example of a "data recording device". Furthermore, in the application example and the following embodiment, the "setting parameter management device 10" may be implemented by a single physical configuration, or may be implemented by a configuration including a plurality of computers cooperating with each other, for example, a system called a cloud.

The setting parameter management device 10 creates and manages, on the basis of environment parameter information pertaining to the control of the surrounding environment of the plants under cultivation in the agricultural house provided from the house environment control device 20, template parameter information that pertains to the control of the surrounding environment and that can be used in common among the plurality of house control devices. The template parameter information includes identification information pertaining to content or an attribute such as the purpose of the use of the template parameter information and a state of the surrounding environment controlled via the house environment control device 20 and used for identifying the template parameter information. The template parameter information managed by the setting parameter management device 10 is provided to the house environment control device 20 that uses the template parameter information to control the surrounding environment of the plants. Then, the cultivation data information on the house environment control device 20 using the template parameter information is recorded at regular intervals in, for example, the cultivation data management DB 30 that is a data recording device associated with the house environment control device in a one-to-one relationship, and a history of cultivation data information is accumulated. The setting parameter management device 10 acquires, from a corresponding cultivation data management DB 30, a history of cultivation data information on the house environment control device 20 that has used the template parameter information to control the surrounding environment of the plants.

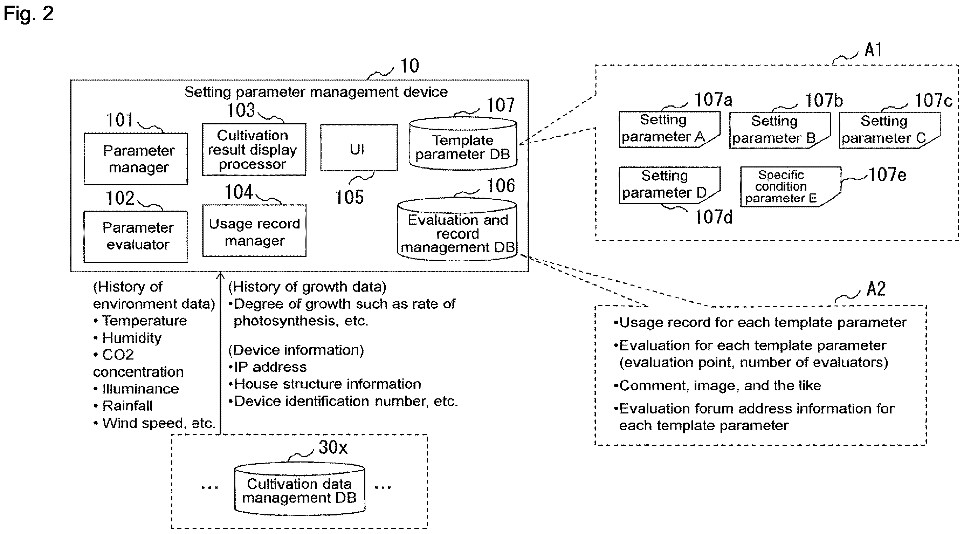

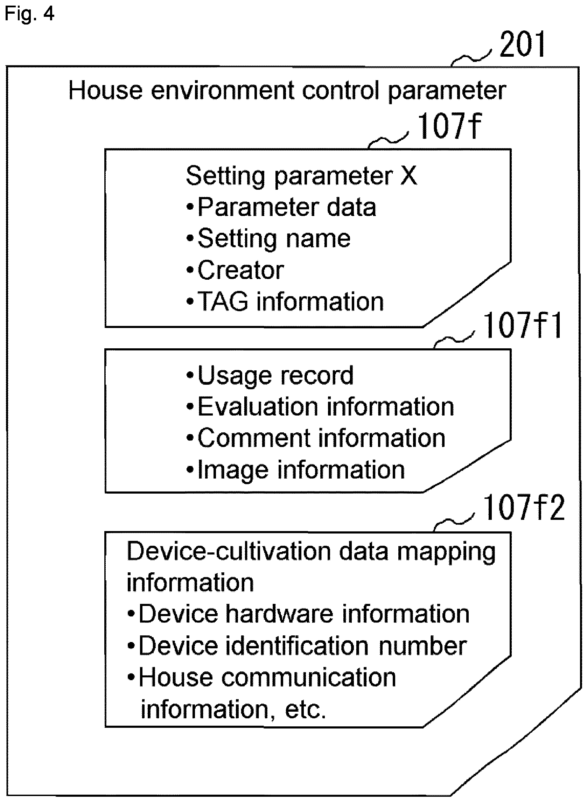

More specifically, as illustrated in Fig. 2, the setting parameter management device 10 includes a parameter manager 101, and holds the template parameter information created by the parameter manager 101 in a template parameter DB 107, so that a parameter group that can be used in common among the plurality of house environment control devices 20 can be constructed. Here, as illustrated in Fig. 4, the template parameter information includes, as the identification information, a name of a creator of the environment parameter information, a name of the template parameter information, and classification information (also referred to as TAG information) used for classifying conditions (an extreme weather such as a high temperature, a low temperature, or a lack of sunlight, a name of a pest against which measures have been taken using the environment parameter information, a name of an area in which the environment parameter information has been used, a house structure, and the like) pertaining to the control of the surrounding environment in the house environment control device 20 that has used the environment parameter information. Further, the identification information includes information showing a comment of the creator or user about the environment parameter information, a usage record, an evaluation, and the like.

As illustrated in Fig. 4, the setting parameter management device 10 adds device-cultivation data mapping information in which the house environment control device 20 and the cultivation data management DB 30 are mapped to each other to the template parameter information, and provides the template parameter information to the house environment control device 20. Here, the device-cultivation data mapping information includes communication address information (IP address or the like) on the house environment control device 20 that uses the template parameter information, structure information (the number of skylight windows, the number of side windows, the number of blackout curtains, and the like) on the agricultural house, communication address information on the cultivation data management DB 30, a security certificate used for recording data, and the like.

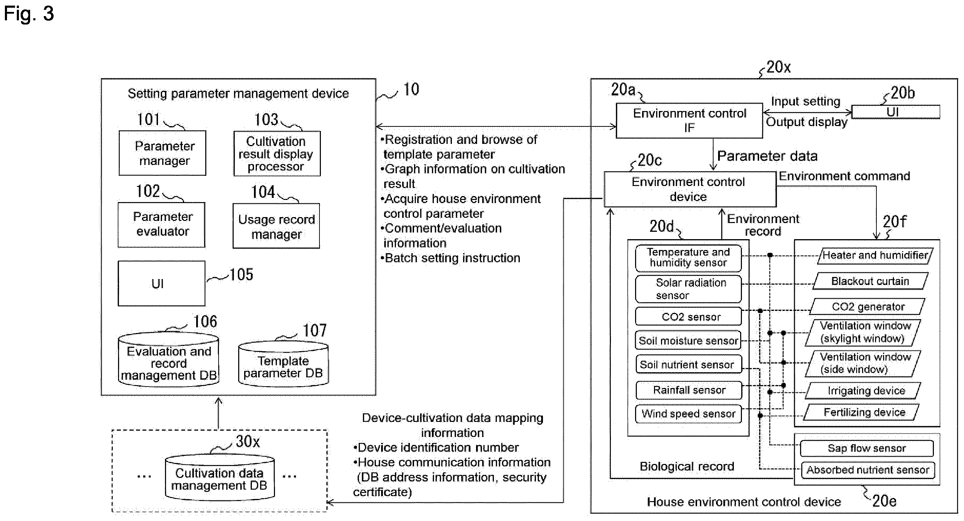

Further, as illustrated in Fig. 3, the house environment control device 20 is provided with an environment conditioner 20f, and measurement values obtained via an environment sensor group 20d and a biological sensor group 20e are provided as the cultivation data information to the cultivation data management DB 30 associated by the device-cultivation data mapping information. Note that the device-cultivation data mapping information corresponds to an example of "mapping information".

Further, in response to a request from the house environment control device 20, the setting parameter management device 10 provides the template parameter information set to the house environment control device 20 to a plurality of house environment control devices 20 registered in advance by batch or to an address corresponding to a designated identification number of the house environment control device 20. Further, the setting parameter management device 10 provides, as the template parameter information, partial environment parameter information used in common among the agricultural houses by batch or with an address designated.

This allows the setting parameter management device 10 to use the template parameter information created on the basis of the environment parameter information pertaining to the control of the surrounding environment and used for one agricultural house and to control the environments of the plurality of agricultural houses using the template parameter information.

Hereinafter, an embodiment of the present invention will be described with reference to the drawings.

### [First embodiment]

Fig. 1 is a functional block diagram of a growing environment control system 1 according to the embodiment. The growing environment control system 1 according to the embodiment includes a setting parameter management device 10, a house environment control device (20#1 to 20#n) that is provided for each agricultural house and controls a surrounding environment of plants under cultivation in the agricultural house, and a cultivation data management DB (30#1 to 30#n) that collects and accumulates, at regular intervals, cultivation data information pertaining to the plants under cultivation in each agricultural house. The setting parameter management device 10 may be a single computer as described later, or may be implemented by a group of a plurality of computers.

As illustrated in Fig. 1, the house environment control device (20#1 to 20#n) provided for each of the plurality of agricultural houses provides the setting parameter management device 20 with corresponding environment control parameter information set for controlling the surrounding environment of the plants under cultivation in each agricultural house. Further, template parameter information (to be described later) selected from a template parameter group managed by the setting parameter management device 20 is provided from the setting parameter management device 20 to each house environment control device. The template parameter information thus selected may be provided by batch to the plurality of house environment control devices 20 in accordance with a user instruction. Note that the setting of the environment control parameter information and the selection of the template parameter information are made by a user who receives service from the system. Examples of the user of the system typically include a producer who cultivates plants using an agricultural house, but the user is not limited to such a producer, and may be an employee or a person concerned of a company that provides consumers with plants cultivated using a plurality of agricultural houses.

Further, the house environment control device (20#1 to 20#n) provides the cultivation data management DB (30#1 to 30#n) with the cultivation data information pertaining to the surrounding environment of the plants under cultivation in a corresponding agricultural house. As described later, the cultivation data information includes environment data on the inside and outside of each agricultural house and growth data on a biological record showing a growth state of the plants. The cultivation data information is collected and accumulated at regular intervals in the cultivation data management DB 30 associated with each house environment control device. Further, from the cultivation data management DB (30#1 to 30#n) to the setting parameter management device 20, cultivation data history information showing a history of cultivation data on the agricultural house associated with each cultivation data management DB collected and accumulated at regular intervals is provided.

Fig. 2 illustrates a block diagram of a more detailed functional configuration of the setting parameter management device 10 and the cultivation data management DB 30. Note that, hereinafter, one cultivation data management DB 30x among the plurality of cultivation data management DBs 30 will be described as an example. The cultivation data management DB 30x accumulates the cultivation data information provided from the house environment control device 20x.

As illustrated in Fig. 2, the cultivation data history information provided from the cultivation data management DB 30x to the setting parameter management device 10 includes a history of environment data on the inside and outside of the agricultural house and a history of growth data on a biological record showing a growth state of plants. The cultivation data history information further includes mapping information (device information) in which the accumulated history of cultivation data and the house environment control device 20x that collects the cultivation data are mapped to each other. Examples of the device information include an IP address showing an address on a network of the house environment control device 20x, house structure information such as the number of skylight windows, the number of side windows, and the number of blackout curtains of the agricultural house provided with the house environment control device 20x, and a unique device identification number (for example, serial number) used for identifying the house environment control device 20x.

As will be described later, the history of environment data is a history of data detected by an environment sensor group 20d included in the house environment control device 20x. Examples of the environment data include a temperature, a humidity, a CO2 concentration, illuminance, rainfall (presence or absence of rainfall, the amount of rainfall), and a wind speed. Further, the history of growth data is a history of data showing a degree of growth such as the rate of photosynthesis in plants detected by a biological sensor group 20e included in the house environment control device 20x. Examples of the growth data include the amount of nutrients absorbed by the plants, the flow rate of sap in the plants, and the like. Note that the data showing the degree of growth may include a captured image of the plants captured by an imaging device such as a camera installed in the agricultural house. The degree of growth of the plants can be estimated on the basis of a result of comparison of the growth state among the captured images captured at regular intervals. The above-described environment data and growth data provided from the cultivation data management DB 30 as the cultivation data information correspond to an example of "cultivation data pertaining to a surrounding environment or a growing condition of plants under cultivation measured by a house environment control device".

The setting parameter management device 10 has a function of holding and managing a template parameter group that can be used in common among the plurality of agricultural houses on the basis of the environment control parameter information provided from each house environment control device. The template parameter information held by the setting parameter management device 10 can be accessed and used by all users who receive the service from the system, and is provided to each house environment control device as template parameter information. Further, the setting parameter management device 10 has a function of managing evaluations and usage records of the template parameter information thus held. Such functions are implemented by functional elements (components) included in the setting parameter management device 10. More specifically, the setting parameter management device 10 includes a parameter manager 101, a parameter evaluator 102, a cultivation result display processor 103, a usage record manager 104, a UI 105, an evaluation and record management DB 106, and a template parameter DB 107 as functional elements. Here, the parameter manager 101, the parameter evaluator 102, the usage record manager 104, and the UI 105 included in the setting parameter management device 10 correspond to examples of components constituting a "manager", and the "cultivation result display processor 103" corresponds to an example of a component constituting a "display processor". Further, the evaluation and record management DB 106 and the template parameter DB 107 included in the setting parameter management device 10 correspond to examples of components constituting a "storage".

The parameter manager 101 enters the environment control parameter information provided from each house environment control device into the template parameter DB 107. The environment control parameter information includes parameter data showing operation settings for the environment conditioner 20f for securing and maintaining a target temperature, a target humidity, a target CO2 concentration, and the amount of sunlight set as environment control targets. For example, as parameter data for securing and maintaining the amount of sunlight, an opening and closing setting for a blackout curtain as the environment conditioner 20f, an opening degree setting based on a relative difference from illuminance measured by an illuminance sensor as the environment sensor group 20d, and the like can be given as examples. Similarly, for the target temperature, the target humidity, and the target CO2 concentration, an operation setting based on an environment amount detected by the environment sensor group 20d of the environment conditioner 20f associated for securing and maintaining each target environment can be given as examples.

Further, the environment control parameter information can include a setting name of the parameter data, a creator name of the parameter data, TAG information (for example, an extreme weather such as a high temperature, a low temperature, and a lack of sunlight, a name of a pest against which measures have been taken using the parameter data, a name of an area in which the parameter data has been used, a house structure, and the like) used for classifying the parameter data, a comment of the creator, and the like. Therefore, when such pieces of information are included in the environment control parameter, the parameter manager 101 adds the pieces of information to the parameter data and stores the parameter data into the template parameter DB 107 as template parameter information. Note that the template parameter information is also added with identification information used for uniquely identifying the parameter. This causes, as indicated by a balloon dashed line A1, a template parameter group classified by the TAG information to be constructed in the template parameter DB 107. A setting parameter A (107a), a setting parameter B (107b), a setting parameter C (107c), a partial parameter D (107d), and a specific condition parameter E (107e) in the balloon dashed line A1 are examples of the template parameter group classified by the TAG information, for example. Here, the partial parameter D (107d) is, for example, partial template parameter information that can be set by batch to the plurality of agricultural houses.

The parameter evaluator 102 manages evaluations on the template parameter information provided from the setting parameter management device 10 to each house environment control device. As one form of how to make an evaluation, a cumulative evaluation point, an average evaluation point, the number of evaluators, the number of usage records, and the like of users who have used the template parameter information can be processed and managed as an evaluation index of the template parameter information. The parameter evaluator 102 stores the evaluation index processed for each piece of template parameter information into the evaluation and record management DB 106 with the evaluation index associated with the identification information on the template parameter information.

Note that each template parameter of the template parameter group may have a bulletin board function such as a forum in which a discussion about the template parameter information can be conducted. The use of the bulletin board makes it possible to attach the content or purpose of the template parameter information discussed, a comment such as user's impression about usability or contrivance using the template parameter information, and a captured image obtained by capturing a growth state.

The cultivation result display processor 103 performs display processing so as to allow the user to visually check the history of cultivation data provided from the cultivation data management DB 30. For example, processing of displaying a graph in which normalized intensity is plotted for each unit step time (for example, per hour, per day, per week, per month, or the like) on the vertical axis with the vertical axis showing a time axis can be given as an example. For example, the setting parameter management device 10 can graphically display the cultivation data history information associated with the house environment control device 20 to which the template parameter information is provided to provide the cultivation data history information to a user who uses the template parameter information for the first time as a historical graph of environment data and growth data.

The usage record manager 104 collects and manages a template parameter information usage record. For example, the usage record manager 104 collects a usage time, a usage period, a usage count, and the like for each piece of template parameter information as information showing the usage record with the usage record associated with the device identification information on the house environment control device 20 to which the template parameter information is provided. Then, the usage record manager 104 stores the usage record collected with the usage record associated with the identification information on the template parameter information into the evaluation and record management DB 105. Here, when there is information pertaining to an evaluation forum for each piece of template parameter information (for example, address information such as a URL), the usage record manager 104 can also collect such information. This causes, as indicated by a balloon dashed line A2, a usage record, an evaluation, a comment or an image, an address information on an evaluation forum, and the like for each piece of template parameter information to be managed in the evaluation and record management DB 106. The UI 105 receives an instruction request or an operation input from a user. The instruction request or the operation input received via the UI 105 is passed to the parameter manager 101, the parameter evaluator 102, the cultivation result display processor 103, and the usage record manager 104.

Fig. 3 illustrates a block diagram of a more detailed functional configuration of the setting parameter management device 10 and the house environment control device 20. As illustrated in Fig. 3, the house environment control device 20 serving as the house environment control device 20x associated with the cultivation data management DB 30x includes an environment control IF 20a that exchanges information with the setting parameter management device 10, and a UI 20b that serves as an input and output device to which the user inputs a setting. A touchscreen is typically given as an example of the UI 20b. The UI 20b, however, may be a WEBUI constructed on a cloud or a UI on a terminal connectable to the cloud. Further, the house environment control device 20 includes an environment control device 20c, the environment sensor group 20d, the biological sensor group 20e, and the environment conditioner 20f.

The environment control parameter information set and input via the UI 20b is provided to the setting parameter management device 10 via the environment control IF 20a. For example, the user creates the environment control parameter information by following a guidance screen provided by the environment control IF 20a and displayed on the touchscreen 20b serving as a display device. Here, the guidance screen provided by the environment control IF 20a includes, for example, a GUI used for issuing, to the setting parameter management device 10, a request to browse the template parameter information or a request to enter the environment control parameter information created by the user into the template parameter, or notifying the user of the determination of use of the provided template parameter information. For example, the user operates the GUI to issue the request to make an entry into the template parameter to output the environment control parameter information created by following the guidance screen provided by the environment control IF 20a to the setting parameter management device 10.

Further, when the user operates the GUI by following the guidance screen provided by the environment control IF 20a to issue the request to browse the template parameter information managed by the setting parameter management device 10, for example, a list of the template parameter information stored in the template parameter DB 107 is displayed and output on the display screen serving as the UI 20b via the environment control IF 20a. The user searches the list displayed on the display screen using a keyword or the like associated with tag information or the like by following the guidance screen provided by the environment control IF 20a. Similarly, the user browses the graph information showing a history of past cultivation data associated with template parameter information, a comment or evaluation about the template parameter information, an attached image, or the like. Repeating such an operation causes template parameter information desired by the user to be selected.

The user operates the GUI by following the guidance screen provided by the environment control IF 20a to output the notification of the determination of use of the selected template parameter information to the setting parameter management device 10. Upon receipt of the notification of the determination of use via the environment control IF 20a, the setting parameter management device 10 adds the device-cultivation data mapping information to the template parameter information and provides the template parameter information to the house environment control device 20 that is a request source.

Fig. 4 illustrates one form of the template parameter information provided from the setting parameter management device 10 to the house environment control device 20. Fig. 4 illustrates a structure of a house environment control parameter 201 serving as the template parameter information to which the device-cultivation data mapping information is added. As illustrated in Fig. 4, the house environment control parameter 201 includes a setting parameter x (107f) corresponding to the selected template parameter information, evaluation and record information 107f1 associated with the setting parameter x (107f), and device-cultivation data mapping information 107f2 in which the house environment control device 20 to which the setting parameter x (107f) is set and the cultivation data management DB 30 are mapped to each other.

For example, the setting parameter management device 10 consults the template parameter DB 107 and the evaluation and record management DB 106 on the basis of the identification information on the template parameter information of which notification of the determination of use is provided to acquire a corresponding setting parameter x (107f) and evaluation and record information 107f1. Then, the setting parameter management device 10 acquires device hardware information (IP address, house structure information, and the like), a device identification number, and house communication information (information on an address on the network of the cultivation data management DB 30, a security certificate, and the like) on the house environment control device 20 that is a request source. Such pieces of information are acquired, for example, via the environment control IF 20a. The setting parameter management device 10 creates the house environment control parameter 201 by combining the setting parameter x (106f), the evaluation and record information 107f1, and the device-cultivation data mapping information 107f2, and provides the house environment control parameter 201 to the house environment control device 20 that is as a request source.

Returning to Fig. 3, the house environment control device 20 displays, upon receipt of the template parameter information, the setting parameter x (107f) and the evaluation and record information 107f1 constituting the house environment control parameter 201 on the display screen of the UI 20b via the environment control IF 20a. Further, parameter data on the setting parameter x (107f) and the device-cultivation data mapping information 107f2 constituting the house environment control parameter 201 are output to the environment control device 20c via the environment control IF 20a. The environment control device 20c outputs an environment command to the environment conditioner 20f so as to maintain and secure a target environment (a temperature and humidity, a CO2 concentration, the amount of sunlight, and the like) on the basis of the received parameter data. Further, the environment control device 20c provides the associated cultivation data management DB 30x with the environment record detected by the environment sensor group 20d and the biological record of the plants detected by the biological sensor group 20e on the basis of the received device-cultivation data mapping information 1076f2.

Note that operating the GUI by following the guidance screen provided by the environment control IF 20a allows the setting parameter x (107f) and the like displayed on the display screen of the UI 20b to be set to a plurality of other agricultural houses. For example, the user may operate the GUI by following the guidance screen to set the setting parameter x (107f) and the like by batch to the plurality of other agricultural houses located in a cultivated field (batch setting), or to an address corresponding to a designated device identification number of the house environment control device 20 provided in another agricultural house (designated setting). The same applies to partial information (partial parameter) used in common among the plurality of agricultural houses. Regarding the setting parameter x (107f) and the like of its own house, the given setting (batch setting, designated setting) request is transmitted to the setting parameter management device 10 via the environment control IF 20a. The setting parameter x (107f) and the like set to the house environment control device 20x are set to the house environment control device 20 of another agricultural house in the cultivated field in accordance with the given request via the setting parameter management device 10.

As illustrated in Fig. 3, the environment conditioner 20f includes a heater and humidifier that regulates a temperature and humidity around the plants, a blackout curtain that regulates the amount of sunlight, a CO2 generator that regulates the amount of CO2, a ventilation window (skylight window, side window) for ventilating air around the plants, an irrigating device that irrigates the plants or soil, and a fertilizing device that regulates the amount of fertilizer. The environment conditioner 20f adjusts an environment that affects the growth of the plants.

Further, the environment sensor group 20d includes a temperature and humidity sensor that measures a temperature and humidity around the plants, a solar radiation sensor that measures the amount of sunlight, a CO2 sensor that measures the amount of CO2, a soil moisture sensor that measures the amount of moisture in soil, a soil nutrient sensor that measures predetermined components in soil, a rainfall sensor that measures presence or absence of rainfall outside the agricultural house and the amount of rainfall, and a wind speed sensor that measures a wind speed outside the agricultural house. Further, the biological sensor group 20e includes a sap flow sensor that measures the flow rate of sap in the plants and an absorbed nutrient sensor that measures the amount of nutrients absorbed by the plants.

An environment record that is environment information on surroundings of the plants measured by the environment sensor group 20d and a biological record that is biological information on the plants measured by the biological sensor group 20e are output to the environment control device 20c. The cultivation data information obtained by adding the device-cultivation data mapping information to the information obtained by combining the environment record (environment data) and the biological record (growth data) is transmitted from the environment control device 20c to the cultivation data management DB 30.

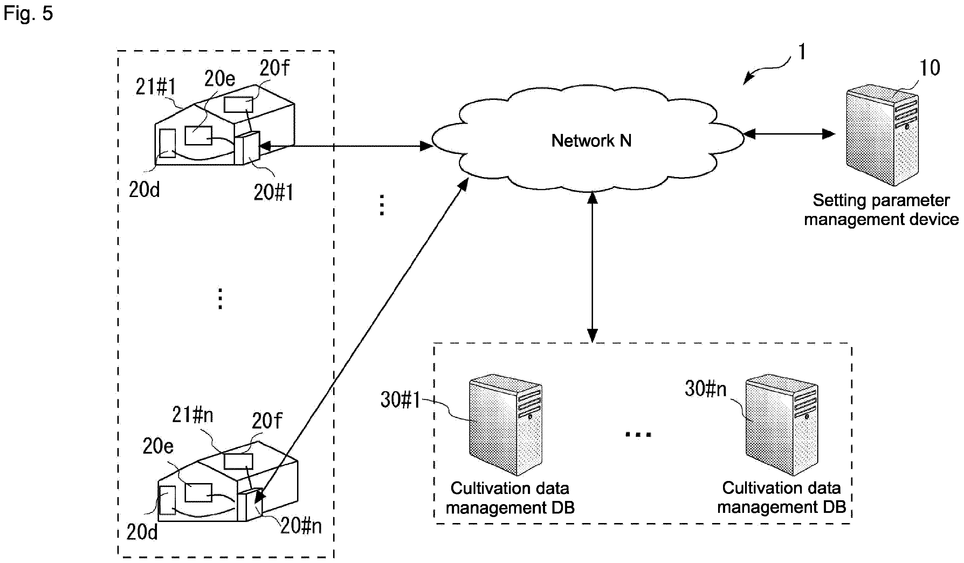

Fig. 5 is a diagram schematically illustrating a hardware configuration of the growing environment control system 1 according to the embodiment. The setting parameter management device 10, the house environment control device (20#1 to 20#n) provided for each agricultural house (21#1 to 21#n), and the cultivation data management DB (30#1 to 30#n) are connected over, for example, a network N constituting a cloud. In the following description, the plurality of agricultural houses (21#1 to 21#n) are also collectively referred to as an "agricultural house 21". Note that although one setting parameter management device 10 is illustrated in Fig. 5, computer devices including each functional element (the parameter manager 101, the parameter evaluator 102, the cultivation result display processor 103, the usage record manager 104, the UI 105, the evaluation and record management DB 106, and the template parameter DB 107) illustrated in Figs. 2 and 3 may cooperate with each other to provide the function of the setting parameter management device 10.

The house environment control device 20 is provided with the environment control IF 20a, the UI 20b, and the environment control device 20c. The UI 20b and the environment control IF 20a are connected to each other, and the environment control IF 20a and the environment control device 20c are connected to each other. Further, the environment control IF 20a and the environment control device 20c are connected to the network N.

The environment control device 20c is connected with the environment sensor group 20d and the biological sensor group 20e, and is capable of measuring a temperature and humidity, sunlight, a CO2 concentration, the amount of nutrients in soil, the amount of moisture in soil, and the like in the agricultural house 21, and transmitting the measurement to the cultivation data management DB 30 as cultivation data information. The environment control device 20c is further connected with the environment conditioner 20f, and is capable of controlling a temperature and humidity, sunlight, a CO2 concentration, the amount of fertilizer, and the amount of moisture in the agricultural house 21.

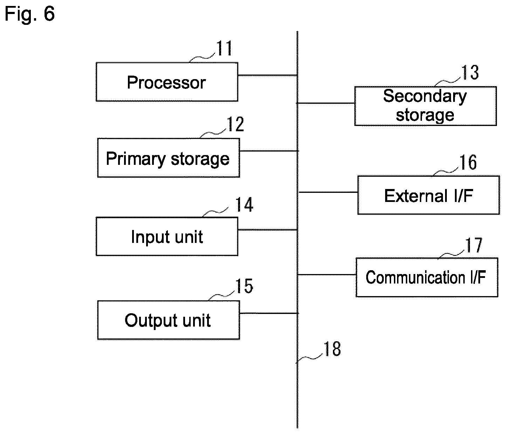

Fig. 6 is an example of a hardware configuration diagram of the setting parameter management device 10 according to the embodiment. The setting parameter management device 10 is a computer device including a processor 11, a primary storage 12, a secondary storage 13, an input unit 14, an output unit 15, an external interface 16, a communication interface 17, and a bus 18.

The processor 11 is a CPU, a DSP, or the like. The primary storage 12 includes a read only memory (ROM), a random access memory (RAM), and the like. Examples of the secondary storage 13 include an erasable programmable ROM (EPROM), a hard disk drive (HDD), a removable medium, and the like. The removable medium is, for example, a flash memory such as a USB memory or an SD card, or a disc recording medium such as a CD-ROM, a DVD disc, or a Blu-ray disc. The secondary storage 13 stores an operating system (OS), various kinds of programs, various kinds of tables, and the like. The processor 11 performs its function by loading the various kinds of programs and the like stored in the secondary storage 13 into a work area of the primary storage 12 and executing the various kinds of programs to control each component and the like.

Note that some or all of the functional units may be implemented by a hardware circuit such as an application specific integrated circuit (ASIC) or a field programmable gate array (FPGA). Further, the setting parameter management device 10 is not necessarily implemented by a single physical configuration, and may be implemented by a configuration including a plurality of computer devices cooperating with each other.

The input unit 14 includes a keyboard, a mouse, a microphone, or the like, and receives an input operation from the user. The output unit 15 includes a display, a speaker, or the like, and provides information to the user. The external interface (denoted as I/F in Fig. 6) 16 is an interface for establishing connection with various external devices. The communication interface 17 is an interface for establishing connection between the setting parameter management device 10 and the network N. Any configuration adapted to the connection system with the network N may be applied to the communication interface 17. Further, the bus 18 is a signal transmission path over which the components of the setting parameter management device 10 are interconnected. Note that the house environment control device 20 and the cultivation data management DB 30 are substantially similar in hardware configuration to the setting parameter management device 10, and thus no description will be given below of the hardware configuration of the house environment control device 20 and the cultivation data management DB 30.

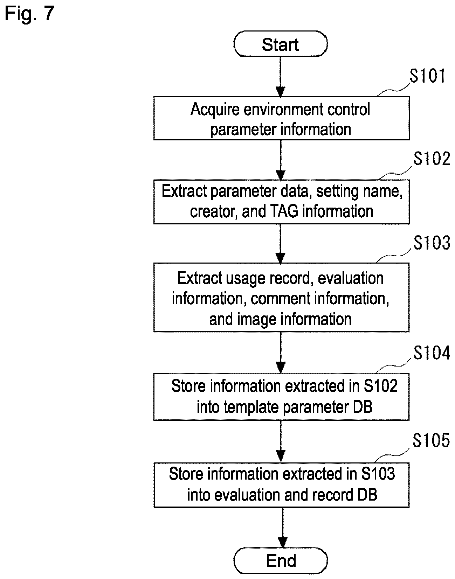

Next, a description will be given of processing of registering template parameter information in the setting parameter management device 10. Fig. 7 is a flowchart illustrating an example of the processing of registering template parameter information performed by the setting parameter management device 10. This flow is provided, for example, by a program stored in the secondary storage 13 and executed by the processor 11 of the setting parameter management device 10. The processing of this flow can be started, for example, when a request to enter the environment control parameter information transmitted from the house environment control device 20 into the template parameter information is received. After the start of the processing, when the environment control parameter information thus received is acquired in step S101, the processing proceeds to step S102. In step S102, the components (parameter data, a setting name, a creator, and TAG information) of the template parameter information included in the environment control parameter information are extracted. The components thus extracted of the template parameter information are passed to step S104, and the processing proceeds to step S103. In step S103, components of the template parameter information included in the environment control parameter information such as a usage record, evaluation information, comment information, and image information contained in the environment control parameter information are extracted. Note that the environment control parameter information may not include such pieces of information. For example, there is a case where a user creates such pieces of information independently without referring to other environment control parameter information. In such a case, it is assumed that the usage record, the evaluation information, and the like are not included. Therefore, in step S103, only the components of the template parameter information included in the environment control parameter information may be extracted. Further, when the components (the usage record, the evaluation information, the comment information, and the image information) of the template parameter information included in the environment control parameter information do not exist, the processing in step S103 may be terminated and proceed to step S104. The components of the template parameter information extracted in step S103 are passed to step S105, and the processing proceeds to step S104.

In step S104, the information extracted in step S102 is stored into the template parameter DB 107 with the information associated with the identification information on corresponding template parameter information. Then, the processing proceeds to step S105, and the information extracted in step S103 is stored into the evaluation and record management DB 106 with the information associated with the identification information on the template parameter information associated in step S104. After step S105, this routine is temporarily exited.

Next, a description will be given of processing of providing information pertaining to template parameters determined to be used in the setting parameter management device 10. As described with reference to Fig. 4, the template parameter information is provided as a house environment control parameter combined with the device-cultivation data mapping information in which the device information on the house environment control device 20 that is a user of the template parameter information and the cultivation data management DB 30 are mapped to each other.

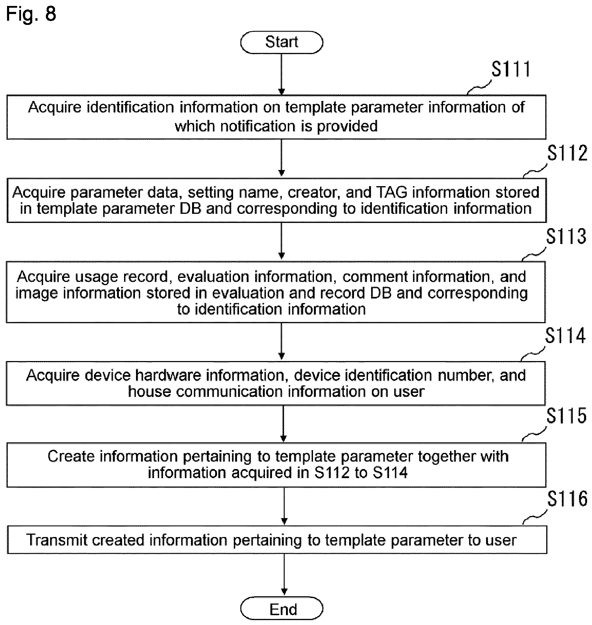

Fig. 8 is a flowchart illustrating an example of processing of providing information pertaining to template parameters determined to be used (house environment control parameters). This flow is provided, for example, by a program stored in the secondary storage 13 and executed by the processor 11 of the setting parameter management device 10, and communications made, as necessary, with the house environment control device 20. The processing of this flow can be started, for example, when the notification of the determination of use of the template parameter information selected by the user is received from the house environment control device 20. The notification of the determination of use includes the identification information on the template parameter information. After the start of the processing, when the identification information on the template parameter information of which notification of the determination of use is provided is acquired in step S111, the processing proceeds to step S112. In step S112, when information (parameter data, a setting name, a creator, and TAG information) stored in the template parameter DB 107 and corresponding to the identification information is acquired, the processing proceeds to step S113. In step S113, when information (a usage record, evaluation information, comment information, and image information) stored in the evaluation and record management DB 106 and associated with the identification information is acquired, the processing proceeds to step S114. Then, in step S114, device hardware information (an IP address, house structure information, and the like), a device identification number, and house communication information (information on an address on the network of the cultivation data management DB 30, a security certificate, and the like) on a user of the template parameter information are acquired. After the end of step S114, the processing proceeds to step S115. In step S115, information pertaining to template parameters (house environment control parameters) is created together with the information acquired in steps S112 to S114. Then, the processing proceeds to step S116, and the information pertaining to template parameters thus created is transmitted to the user. After step S116, this routine is temporarily exited.

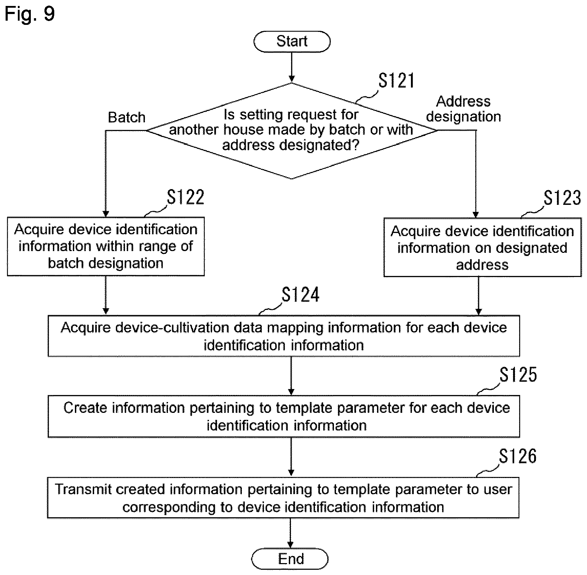

Next, a description will be given of processing of setting information pertaining to template parameters to another house in the setting parameter management device 10. Fig. 9 is a flowchart illustrating an example of processing of setting the information pertaining to template parameters to another house. This flow is provided, for example, by a program stored in the secondary storage 13 and executed by the processor 11 of the setting parameter management device 10, and communications made, as necessary, with the plurality of house environment control devices 20. The processing of this flow can be started, for example, when a request to set the information pertaining to template parameters to another house is received from one house environment control device 20. The setting request for another house contains device identification information on batch setting or a setting target. Further, as described with reference to Fig. 2, the information pertaining to template parameters includes a template parameter group (each setting parameter, a specific condition parameter, a partial parameter, and the like) constructed in the template parameter DB 107 and classified by the TAG information.

After the start of the processing, the type of the setting request for another house (batch setting or address designation with the device identification information on a setting target designated as an address) is determined in step S121. When the determination results in batch designation (step S121 "batch"), the processing proceeds to step S122. On the other hand, when the determination results in batch designation (step S121 "address designation"), the processing proceeds to step S123.

In step S122, device identification information on the plurality of house environment control devices 20 within a range of batch designation is acquired. Registration of such device identification information on the house environment control devices within the range of batch designation is stored in advance in the setting parameter management device 10. In step S122, device identification information on other house environment control devices 20 obtained by excluding device identification information on house environment control devices 20 for which the setting request for another house has been made is acquired from the range of the pre-registered batch designation. After step S122, the processing proceeds to step S124. In step S123, the device identification information on the house environment control device 20 designated as an address is acquired. After step S123, the processing proceeds to step S124.

In step S124, the device-cultivation data mapping information for each device identification information is acquired. The device-cultivation data mapping information is acquired by processing the same as in step S114 illustrated in Fig. 8. That is, when the setting request for another house is made under batch designation, the device-cultivation data mapping information pertaining to other house environment control devices 20 obtained by excluding device identification information on house environment control devices 20 for which the setting request for another house has been made is acquired. Further, when the setting request for another house is made under address designation, device-cultivation data mapping information on a house environment control device 20 corresponding to the address is acquired. After step S124, the processing proceeds to step S125.

In step S125, information pertaining to template parameters (house environment control parameter) for each device identification information is created. The information pertaining to template parameters is created by processing the same as in step S115 illustrated in Fig. 8. That is, when the setting request for another house is made under batch designation, the information pertaining to template parameters for other house environment control devices 20 obtained by excluding device identification information on house environment control devices 20 for which the setting request for another house have been made is created. When the setting request for another house is made under address designation, the information pertaining to template parameters for the house environment control device 20 corresponding to the address is created. Note that the information pertaining to template parameters created in step S125 includes a specific condition parameter and a partial parameter that can be set in common to a plurality of agricultural houses. After step S125, the processing proceeds to step S126. In step S126, the created information pertaining to template parameters is transmitted to the user corresponding to the device identification information. After step S126, this routine is temporarily exited.

As described above, the setting parameter management device 10 according to the embodiment is configured to create the template parameter information showing a common parameter that can be used in common among the plurality of house environment control devices 20 on the basis of the environment control parameter information whose registration is requested by the house environment control devices 20. Then, the components of the template parameter information thus created are held in the template parameter DB 107 and the evaluation and record management DB 106. This allows the setting parameter management device 10 to share and hold individual know-how for managing the environment in the agricultural house suitable for the growth state of plants as the template parameter information. For example, data management of setting environments set for the agricultural houses, which is mainly left to the discretion of an individual user, can be centralized. It is further possible to use, as a shared asset, information pertaining to past setting environments set for a specific condition, such as a low temperature, a high temperature, or a lack of sunlight, which inhibits the growth of plants.

Further, in the embodiment, the template parameter information includes components such as a usage record, evaluation information, comment information, and image information. Then, a history of environment data pertaining to the agricultural houses using the template parameter information (a temperature, a humidity, a CO2 concentration, illuminance, rainfall (presence or absence of rainfall, the amount of rainfall), a wind speed, and the like) and growth data showing the degree of growth such as the rate of photosynthesis in plants (the amount of nutrients absorbed by plants, flow rate of sap in plants, and the like) is accumulated in the cultivation data management DB 30. The environment data and the growth data accumulated in the cultivation data management DB 30 are provided to the user as a historical graph. This makes it possible to provide the user with an objective index for determining the use of the template parameter information for the selection of the use of the template parameter information.

Furthermore, in the embodiment, template parameter information used by one house environment control device 20 is set to other house environment control devices 20 under batch setting or address designation with the device identification information on a setting target designated as an address. The template parameter information set from one house environment control device 20 to other house environment control devices 20 includes a specific condition parameter and a partial parameter that can be set in common to a plurality of agricultural houses. This allows the same setting environment as the setting environment set to one agricultural house to be set to the other agricultural houses by batch or with an address designated. Further, partial information common among a plurality of agricultural houses can be set by batch or with an address designated. According to the embodiment, even when the number of agricultural houses built in a cultivated field is relatively large, it is possible to reduce a load of setting work for environment control.

Note that the growing environment control system according to the present invention is not limited to the configurations described in the above embodiment. The configurations of the above embodiment may be combined in an allowable manner without departing from the problem and technical idea of the present invention.

Note that, in the following, the components of the present invention will be described with reference numerals used in the drawings in order to allow the components of the present invention and the configurations of the embodiment to be compared.

### <Invention 1 >

A growing environment control system (1) including:
a house environment control device (20) configured to control a surrounding environment of plants under cultivation in an agricultural house; and
a parameter management device (10) configured to manage, in a collective manner, environment parameter information used by the house environment control device (20) and pertaining to control of the surrounding environment, the parameter management device (10) including a manager (101, 102, 104) configured to create template parameter information including the environment parameter information and identification information pertaining to content or an attribute of the environment parameter information and used for identifying the environment parameter information, hold the template parameter information created in a storage (105, 106), and provide the template parameter information held in the storage in response to a use request from the house environment control device.

### DESCRIPTION OF SYMBOLS

- 1: growing environment control system
- 10: setting parameter management device (parameter management device)
- 101: parameter manager (manager)
- 102: parameter evaluator (manager)
- 103: cultivation result display processor (display processor)
- 104: usage record manager (manager)
- 105: UI (manager)
- 106: evaluation and record management DB (storage)
- 107: template parameter DB (storage)
- 20: house environment control device
- 20a: environment control IF
- 20b: UI
- 20c: environment control device
- 20d: environment sensor group
- 20e: biological sensor group
- 20f: environment conditioner
- 30: cultivation data management DB (data recording device)

## Claims

1. A growing environment control system comprising:
a house environment control device configured to control a surrounding environment of plants under cultivation in an agricultural house; and
a parameter management device configured to manage, in a collective manner, environment parameter information used by the house environment control device and pertaining to control of the surrounding environment, the parameter management device comprising a manager configured to create template parameter information comprising the environment parameter information and identification information pertaining to content or an attribute of the environment parameter information and used for identifying the environment parameter information, hold the template parameter information created in a storage, and provide the template parameter information held in the storage in response to a use request from the house environment control device.

2. The growing environment control system according to claim 1, wherein
the identification information comprises information on at least one of a name of a creator of the environment parameter information, a name of the template parameter information, classification information used for classifying conditions pertaining to the control of the surrounding environment of the house environment control device that has used the environment parameter information, a comment of the creator, a usage record of the environment parameter information, a comment of a user of the environment parameter information, or an evaluation, made by the user, of the environment parameter information.

3. The growing environment control system according to claim 1 or 2, further comprising a data recording device configured to record a history of cultivation data pertaining to the surrounding environment or a growing condition of the plants under cultivation measured by the house environment control device, wherein
the manager provides mapping information used for associating the house environment control device that uses the template parameter information to the cultivation data recorded in the data recording device of the house environment control device with the mapping information added to the template parameter information.

4. The growing environment control system according to claim 3, wherein
the cultivation data comprises information on at least one of a temperature and humidity, a CO2 concentration, sunlight, an amount of moisture in soil, an amount of nutrients in soil, an amount of rainfall, a wind speed, a flow rate of sap in the plants, or an amount of nutrients absorbed by the plants.

5. The growing environment control system according to claim 3, wherein
the mapping information comprises communication address information on the house environment control device, structure information on the agricultural house, an identification number of the house environment control device, communication address information on the data recording device, and security information used for recording a history of data pertaining to the surrounding environment in the data recording device.

6. The growing environment control system according to any one of claims 3 to 5, wherein
the parameter management device further comprises a display processor configured to create graph information showing changes in the cultivation data over time from the history of the cultivation data recorded in the data recording device, and
the manager provides, when providing the template parameter information, the graph information created from the history of the cultivation data of the house environment control device that has used the template parameter information.

7. The growing environment control system according to any one of claims 1 to 6, wherein
the manager provides the template parameter information to a plurality of the house environment control devices registered in advance by batch or to the house environment control device corresponding to a designated identification number.

8. The growing environment control system according to any one of claims 1 to 7, wherein
the template parameter information comprises partial environment parameter information used in common among the house environment control devices.
